# FASCICULE DE BREVET EUROPEEN

(11) **EP 1 634 253 B1**
(45) Date de publication et mention de la délivrance du brevet: **29.04.2015**
(21) Numéro de dépôt: 04741798.5
(22) Date de dépôt: 15.06.2004
(51) Int. Cl.: G06Q 20/34, G07F 7/10, G06F 12/02

(54) **PROCÉDÉ D'ÉCRITURE, DE MISE À JOUR ET D'ALLOCATION MÉMOIRE APPLIQUÉ À L'ÉCRITURE DE FICHIERS SUR UN SUPPORT MÉMOIRE TEL QU'UNE CARTE À PUCE**
VERFAHREN ZUM SCHREIBEN, ZUR AKTUALISIERUNG UND ZUR SPEICHERZUTEILUNG FÜR SCHREIBEN VON DATEIEN AUF EIN SPEICHERMEDIUM, Z.B. EINE CHIPKARTE
METHOD FOR WRITING, UPDATING AND ALLOCATING MEMORY, USED FOR THE WRITING OF FILES ON A MEMORY CARRIER SUCH AS A CHIP CARD

(30) Priorité: 17.06.2003 FR 0307290
(43) Date de publication de la demande: 15.03.2006
(73) Titulaire: THALES, 92200 Neuilly sur Seine (FR)
(72) Inventeur: D'ATHIS, Thierry THALES Intellectual Property, F-94117 ARCUEIL (FR)
(74) Mandataire: Lucas, Laurent Jacques
(86) Numéro de dépôt international: PCT/EP2004/051110
(87) Numéro de publication internationale: WO 2004/111953

(56) Documents cités:
- EP-A1- 1 304 702
- FR-A- 2 635 886
- FR-A- 2 806 813
- FR-A1- 2 812 116
- US-A- 2 812 116
- US-A1- 2001 011 267
- US-B1- 6 189 081

## Description

La présente invention concerne les techniques de lecture et d'écriture de données dans un support mémoire. Elle s'applique notamment à la lecture et l'écriture de données dans des cartes à puces, ces cartes étant utilisées en tant que titres de transport dans les transports publics. La lecture et l'écriture sont réalisées par exemple par des valideurs de bus ou au niveau de portillons ou de tourniquets de métro.

Le flux de voyageurs traversant un portillon ou un tourniquet peut atteindre en période de pointe de l'ordre 30 personnes par minute (en Europe) à 60 personnes par minute (en Asie). Les tickets à bande magnétique permettent de communiquer (lecture) et de mettre à jour (écriture) des données rapidement. En effet, le trajet du ticket suit celui du voyageur.

Cependant ces tickets ne permettent pas de stocker beaucoup de données. Un ticket à bande magnétique de format Edmonson par exemple contient 62 bits utiles seulement. De plus ces tickets ne permettent pas de réaliser des transactions sécurisées. On peut utiliser des cartes à puces pour stocker plus de données. Ces cartes peuvent être en outre équipées de dispositifs de cryptage et d'authentification afin de sécuriser les transactions. Ces dispositifs de cryptage et d'authentification permettent de garantir que les écritures sur la carte sont limitées aux seuls appareils qui en ont le droit.

Les cartes à puces peuvent, selon leur nature, être lues avec conctact ou sans contact. Les premières sont lues en positionnant la puce de la carte en contact avec une tête de lecture magnétique. A cet effet, ces cartes sont souvent insérées dans une fente de lecture. Cette contrainte mécanique empêche de déplacer la carte avec le voyageur pour lui faire suivre le même trajet. Il n'est donc pas possible d'utiliser ces cartes dans le domaine des transports. On utilise donc des cartes à puces sans contact.

Les cartes à puce sans contact utilisées dans le domaine des transports répondent généralement à la norme ISO 1443 concernant les échanges de données (modulation, porteuse). La zone de communication entre carte et antenne s'étend jusqu'à 10 cm. Afin d'obtenir un geste fluide lors de la marche du voyageur, la durée d'une transaction (appelé temps de transaction billettique) ne doit pas excéder 150 ms. A partir de 200 ms, le voyageur doit marquer nettement un temps d'arrêt.

Si le voyageur ne laisse pas sa carte suffisamment longtemps dans la zone de communication, la transaction en cours est interrompue. Si la transaction s'interrompt au milieu d'une écriture, les données enregistrées ne sont pas intègres. Il est donc souhaitable que l'écriture soit réalisée de telle sorte qu'une carte retrouve sont état initial même lorsqu'une transaction est interrompue. En d'autres termes, la carte devrait contenir les données initiales si une transaction est interrompue.

Les cartes à puce peuvent être équipées ou non d'un microprocesseur. Les cartes à puce micro-câblées sont dépourvues de microprocesseur. L'espace mémoire de ces cartes est divisé en blocs. Le lecteur accède à ces blocs, en lecture comme en écriture, selon ses besoins. Cependant les données sur de telles cartes ne sont pas structurées : la notion de fichier logique n'existe pas. A l'inverse, les cartes, équipées d'un microprocesseur permettent de présenter les données enregistrées de manière structurée, sous forme de fichiers. On peut citer les cartes à microprocesseur répondant à la norme ISO 7816-4 ou à la norme EN 726-3. Cependant ces cartes sont plus chères que les cartes micro-câblées.

Le brevet d'invention français FR 2635886A décrit des procédés pour traiter, c'est à dire écrire, lire et sélectionner, des données dans une carte à puce. Un problème exposé dans ce document est de disposer d'une structure de données permettant de définir un nombre de fichier non limité par la taille de l'espace mémoire alloué à une FAT, acronyme anglo-saxon pour File Allocation Table. Une FAT est une structure contenant des données de définition de fichier. Pour résoudre le problème cité dans ce document, la FAT est inscrite en partant d'une extrémité de la zone mémoire, et les données des fichiers sont inscrites en partant de l'autre extrémité de la zone mémoire.

Un but de l'invention est de fournir un procédé de lecture et un procédé d'écriture de données d'un fichier dans un support mémoire (tel qu'une carte à puce sans contact micro-câblée) le procédé étant rapide, simple à mettre en oeuvre et permettant au support mémoire de retrouver son état initial lorsqu'une transaction (écriture) est interrompue.

La mise en oeuvre de l'invention nécessite d'allouer préalablement un groupe (DHS) d'espaces mémoires (A0...A6) dans la carte. On alloue un nombre d'espaces mémoire supérieur au nombre d'enregistrements (E1...E6) du fichier (FHS) considéré. Le nombre d'espaces mémoires alloués en excès permet d'effectuer les opérations de mise à jour selon l'invention.

Lors d'une opération de mise à jour, seules les nouvelles données (d7) sont écrites sur la carte, sans perte des anciennes données (d1). A cet effet, les nouvelles données (d7) sont écrites dans des espaces mémoires (A2) non occupés par d'anciennes données (d1) du fichier. Ces espaces mémoires sont choisis parmi les espaces mémoires préalablement alloués. Une fois les nouvelles données écrites, on écrit un nouveau descripteur (IHS2) de fichier permettant de retrouver les nouveaux enregistrements du fichier parmi les espaces mémoires alloués.

L'invention s'applique de manière avantageuse à l'écriture de fichiers cycliques.

D'autres caractéristiques et avantages de l'invention apparaîtront à l'aide de la description qui suit faite en regard de dessins annexés :
- la figure 1 et 2 représentent un exemple d'implantation des données dans la mémoire d'une carte sans contact, la figure 2 représentant un détail de la figure 1 ;
- les figures 3, 5 et 7 représentent un fichier, un exemple d'implantation des données du fichier dans la mémoire, et un descripteur de ce fichier;
- les figures 4, 6 et 8 représente les mêmes éléments que les figures 3, 5, et 7 après une opération de mise à jour du fichier ;
- les figure 9 à 14, un exemple de mise à jour d'un fichier cyclique;
- les figures 15a à 15c, un exemple de tableau de permutation permettant de réaliser un codage avantageux des descripteurs de fichier.

On décrit maintenant un exemple de mise en oeuvre de l'invention dans une carte à puce micro-câblée. Cette carte est une carte sans contact utilisée comme titre de transport (connue sous le nom de « contactless ticketing card » dans la littérature anglo-saxonne).

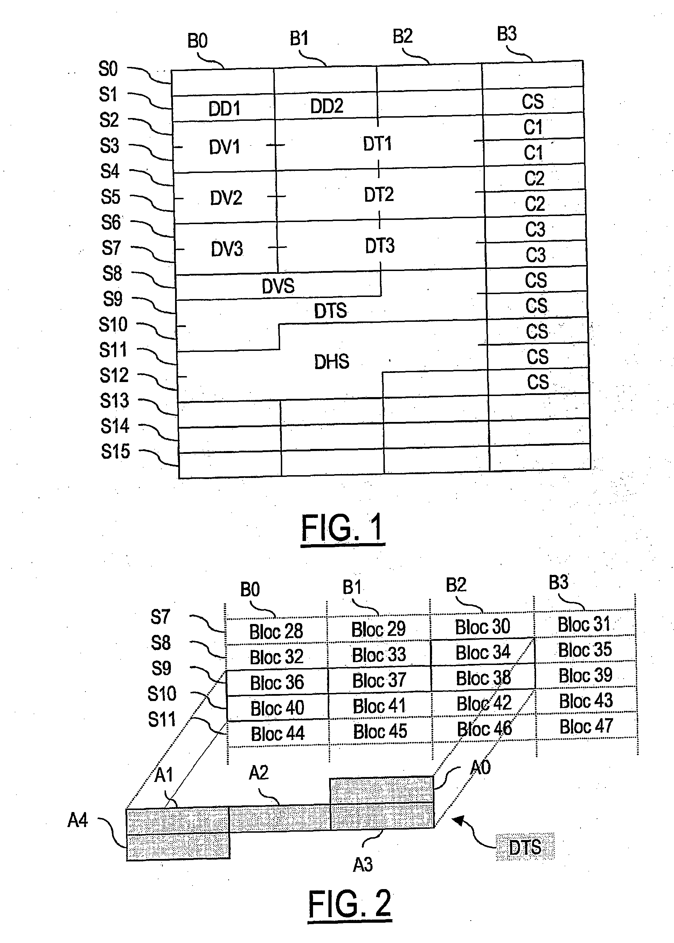

On se réfère maintenant à la figure 1, sur laquelle est représenté un exemple d'implantation de données dans la mémoire d'une carte à puce micro-câblée. Les données d'une carte sont regroupées par blocs, les blocs étant eux-mêmes regroupés par secteurs S0, S1, ..., S15. Un bloc est la plus petite unité pouvant être adressée.

### Exemple 1 : Mémoire d'une carte à puce micro-câblée

On décrit dans cet exemple la carte mémoire "MIFARE® STANDARD" de PHILIPS. La carte comprend 64 blocs. Un bloc comprend 128 bits de données, c'est à dire 16 octets. Les blocs sont regroupés par groupe de quatre, chaque groupe de bloc formant un secteur. Les blocs d'un secteur sont référencés B0, B1, B2, B3 sur la figure 1. La carte comprend par conséquent 16 secteurs. Les secteurs sont référencés S0 à S15.

Fin de l'exemple 1.

Les données écrites sur la carte sont protégées. Il n'est possible d'accéder aux données qu'avec une clé d'accès. Une clé d'accès est un secret cryptographique requis pour pouvoir accéder à l'espace mémoire protégé par ce secret.

A chaque clé d'accès est associé une information sur les droits d'accès aux données protégées par la clé. Ainsi, chaque clé d'accès limite plus ou moins les droits d'accès aux données.

Les différents droits d'accès peuvent être les suivants :
- N : accès interdit en lecture ou en écriture;
- R : accès autorisé en lecture seule ;
- D : accès autorisé en lecture, et accès en écriture limité aux opérations qui diminuent la valeur des données mémorisées ;
- W : accès autorisé en lecture et en écriture.

Des données protégées par une même clé peuvent avoir des droits d'accès différents. Ainsi, une personne peut accéder avec une clé à certaines données avec des droits étendus (par exemple W), et à d'autres données avec des droits limités (par exemple R).

Des mêmes données peuvent être protégées par des clés d'accès différentes, ce qui permet de définir des droits d'accès différents pour ces mêmes données. Ainsi plusieurs personnes détenant des clés d'accès différentes peuvent accéder aux mêmes données avec des droits d'accès plus ou moins étendus.

Les clés d'accès peuvent être écrites dans la carte. Ces clés ne peuvent pas être lues. Elles peuvent être modifiées, sous réserve de connaître les clés déjà écrites.

### Exemple 2 : Protection des données dans la carte de l'exemple 1

Le quatrième bloc B3 de chaque secteur contient une clé d'accès A, une clé d'accès B optionnelle, et les droits d'accès aux quatre blocs B0 à B3 de ce secteur. Chaque clé d'accès est un nombre de 48 bits, c'est à dire 6 octets. Les droits d'accès peuvent être codés avec les bits du bloc B3 non utilisés pour coder les clés.

Les droits d'accès aux données d'un bloc de données (blocs B0 à B2) peuvent être codés avec trois bits. Le tableau suivant, de cinq colonnes, donne un exemple de codage des droits d'accès. Les trois premières colonnes contiennent les bits codant pour les droits d'accès d'un bloc. La quatrième colonne contient les droits d'accès associés à la clé A. La cinquième colonne contient les droits d'accès associés à la clé B.

| bit n°1 | bit n°2 | bit n°3 | clé A | clé B |
|---|---|---|---|---|
| 0 | 0 | 0 | W | W |
| 0 | 0 | 1 | D | D |
| 0 | 1 | 0 | R | R |
| 0 | 1 | 1 | N | W |
| 1 | 0 | 0 | R | W |
| 1 | 0 | 1 | N | R |
| 1 | 1 | 0 | D | W |
| 1 | 1 | 1 | N | N |

Les droits d'accès aux données du bloc B3 sont particuliers. En effet, la modification des données de ce bloc permet de modifier la valeur d'une clé et/ou les données codant pour les droits d'accès du secteur. Les droits d'accès aux données du bloc B3 peuvent être :
- R1 : accès autorisé en lecture seule aux données codant pour les droits d'accès ;
- R2 : accès autorisé en lecture seule aux données codant pour les droits d'accès et à la clé B ;
- W1 : accès autorisé en lecture et en écriture aux données codant pour les droits d'accès ;
- W2R1 : accès autorisé en écriture mais pas en lecture aux clés A et B, accès autorisé en lecture seule aux données codant pour les droits d'accès ;
- W2R2 : accès autorisé en écriture mais pas en lecture à la clé A, accès autorisé en lecture et en écriture à la clé B, accès autorisé en lecture seule aux données codant pour les droits d'accès ;
- W2W1 : accès autorisé en écriture mais pas en lecture aux clés A et B, accès autorisé en lecture et en écriture aux données codant pour les droits d'accès;
- W3 : accès autorisé en écriture mais pas en lecture à la clé A, accès autorisé en lecture et en écriture à la clé B et aux données codant pour les droits d'accès.

Les droits d'accès aux données du bloc B3 peuvent être codés avec trois bits. Le tableau suivant, de cinq colonnes, donne un exemple de codage de ces droits d'accès. Les trois premières colonnes contiennent les bits codant pour les droits d'accès de ce bloc. La quatrième colonne contient les droits d'accès associés à la clé A. La cinquième colonne contient les droits d'accès associés à la clé B.

| bit n°1 | bit n°2 | bit n°3 | clé A | clé B |
|---|---|---|---|---|
| 0 | 0 | 0 | W2R2 | N |
| 0 | 0 | 1 | W3 | N |
| 0 | 1 | 0 | R2 | N |
| 0 | 1 | 1 | R1 | W2W1 |
| 1 | 0 | 0 | R1 | W2R1 |
| 1 | 0 | 1 | R1 | W1 |
| 1 | 1 | 0 | R1 | R1 |
| 1 | 1 | 1 | R1 | R1 |

### Fin de l'exemple 2.

Les titres de transports sont traités par différentes machines. Un premier groupe de machines permet de réaliser des opérations de vente ou de rechargement. Les machines de ce premier groupe sont appelées machines de vente. Elles comprennent les machines de personnalisation de titre, les automates de vente, les machines de vente au guichet. Lors d'une opération de vente, la machine de vente écrit des données relatives au contrat (caractéristiques du trajet, durée de l'abonnement...). Lors d'une opération de rechargement, la machine de vente augmente un crédit, si la carte permet de mémoriser un crédit (carte porte-monnaie électronique), la valeur de la carte se trouvant accrue du crédit rechargé.

Un second groupe de machines permet de contrôler la carte et/ou d'en diminuer la valeur en échange d'un service de transport. Les machines de ce premier groupe sont appelées machines de validation. Elles comprennent les valideurs sans obstacles, les portillons, les appareils de contrôle portatifs, les machines d'information, les pupitres de bus. Les machines de validations ne modifient pas les données du contrat, par contre elles doivent y accéder en lecture. Les machines de validation peuvent en outre modifier la valeur de la carte, cette valeur étant représentée par des données appelées données de validation.

Les machines de vente et les machines de validations accèdent donc aux données de la carte avec des droits d'accès différents. Ces deux types de machines utilisent des clés différentes.

Les machines de vente peuvent utiliser une première clé KV. Les machines de validations peuvent utiliser une seconde clé KT, les droits d'accès associés à la clé KT étant limités par rapport à ceux associés à la clé KV.

### Exemple 3 : Application aux transports publics

La clé KV permet d'accéder aux données de contrat et aux données de validation en lecture et en écriture (W). La seconde clé KT permet aussi d'accéder aux données de validation en lecture et en écriture (W). Cependant elle ne permet d'accéder aux données de contrat qu'en lecture (R). Les clés KV et KT correspondent respectivement aux clés B et A de la carte (voir exemple 2).

### Fin de l'exemple 3.

Comme indiqué plus haut, les données de différents secteurs peuvent être protégées par des jeux de clés différents. Le fait de diviser la carte en plusieurs secteurs protégés par des clés d'accès séparées permet d'utiliser la carte pour des applications différentes (cartes mutli-applications).

Ceci est utile aussi si plusieurs opérateurs de transport utilisent une même carte comme titre de transport. Chaque opérateur de transport peut utiliser un jeu de clé qui lui est propre pour accéder à ses données (en lecture et écriture) de manière exclusive. D'autres données peuvent être partagées par les différents opérateurs. Les opérateurs peuvent utiliser un jeu de clés qu'ils partagent pour accéder à ces données de manière non exclusive.

### Exemple 4 : Application aux transports publics, avec plusieurs opérateurs (alternative à l'exemple 3)

La carte contient des données privées de trois opérateurs de transport, et des données partagées par ces opérateurs. Chaque opérateur accède à ses données privées de manière exclusive. Tous les opérateurs peuvent accéder aux données partagées. De même que dans l'exemple 3, les données comprennent des données de validation et des données de contrat.

Les machines de vente d'un opérateur n° *i* (avec *i* = 1, 2 ou 3) utilisent une clé privée KV*i* pour accéder aux données de validation (en lecture et en écriture) et de contrat (en lecture et en écriture) de cet opérateur. Les machines de vente de tous les opérateurs utilisent une clé partagée KVS pour accéder aux données partagées (validation, contrat) entre les opérateurs. Les machines accèdent à ces données partagées avec les mêmes droits d'accès.

De même, les machines de validation d'un opérateur utilisent une clé privée KT*i* pour accéder aux données de validation (en lecture et en écriture) et de contrat (en lecture seule) de cet opérateur. Lés machines de validation de tous les opérateurs utilisent une clé partagée KTS pour accéder aux données du partagées avec les mêmes droits d'accès.

On écrit aussi dans la carte un historique des transactions (connu sous le nom de « history long » dans la littérature anglo-saxonne). Les machines de validation et les machines de vente de tous les opérateurs peuvent accéder aux données de l'historique en lecture et en écriture en utilisant respectivement les clés KTS et KVS.

### Fin de l'exemple 4.

Les programmes des machines de vente et des machines de validation utilisent des fichiers pour accéder aux données. Un fichier est une suite ordonnée d'enregistrements. Chaque enregistrement comprend des données. Un fichier comprend un nombre déterminé d'enregistrements, chaque enregistrement ayant une taille déterminée.

### Exemple 5 : Organisation en fichiers des données de l'exemple 4

Les données sont regroupées dans neuf fichiers FV*i*, FT*i* (avec *i* = 1, 2 ou 3), FVS, FTS, FHS. Ces fichiers comprennent un nombre d'enregistrements fixes. Chaque enregistrement comprend 128 bits de données, ce qui correspond à un bloc. Bien entendu, l'invention ne se limite pas à cet exemple particulier: la taille d'un enregistrement peut être différente de la taille d'un bloc.

Le tableau suivant comprend cinq colonnes. La première colonne contient le nom du fichier. La seconde colonne contient le nombre d'enregistrement du fichier. La troisième colonne contient une description des données du fichier. La quatrième colonne rappelle les droits d'accès des machines de validation à ces données. Ces droits d'accès sont associés aux clés KTS, KT1, KT2 ou KT3 qui correspondent à la clé A de la carte (voir exemple 2). La cinquième colonne rappelle les droits d'accès des machines de vente à ces données. Ces droits d'accès sont associés aux clés KVS, KV1, KV2 ou KV3 qui correspondent à la clé B de la carte (voir exemple 2).

| Fichier | Enreg. | Données | clé A | clé B |
|---|---|---|---|---|
| FTi | 1 | données de validation de l'opérateur n° *i* | R | W |
| FTi | 1 | données de contrat de l'opérateur n° *i* | W | W |
| FVS | 1 | données de validation partagées | R | W |
| FTS | 3 | données de contrat partagées | W | W |
| FHS | 6 | historique des transactions | W | W |

### Fin de l'exemple 5.

Selon l'invention, on alloue des espaces mémoire de la carte pour écrire les enregistrements des fichiers. Chaque enregistrement est destiné à être écrit dans un espace mémoire alloué. L'allocation d'espaces mémoires se traduit par une détermination de paramètres utilisés par les programmes des machines mettant en oeuvre les procédés d'écriture ou de lecture selon l'invention. Ainsi, on réalise une allocation d'espaces mémoire lors de la programmation des logiciels équipant ces machines.

On réalise une allocation d'espaces mémoire pour un groupe d'enregistrements sélectionnés. Ce groupe comprend un nombre déterminé d'enregistrements. Chaque enregistrement du groupe a une taille déterminée. Les enregistrements de ce groupe peuvent être par exemple les enregistrements d'un fichier. Mais l'invention ne se limite pas à cet exemple. Le groupe d'enregistrements peut être formé par une partie seulement des enregistrements d'un fichier donné. D'autre part, les enregistrements du groupe peuvent appartenir à plusieurs fichiers.

Certains (voire tous les) enregistrements de ce groupe sont destinés à être mis à jour. Cette mise à jour consiste à remplacer les données de ces enregistrements par de nouvelles données.

Selon l'invention, on détermine un nombre N d'espaces mémoires à allouer. Ce nombre excède le nombre d'enregistrements du groupe. Les espaces mémoires en excès sont alloués pour y écrire les nouvelles données lors d'une mise à jour. Le nombre d'espaces mémoire en excès est au moins égal au nombre maximum d'enregistrements du groupe d'enregistrements susceptibles d'être mis à jour simultanément lors d'une opération d'écriture.

On détermine un groupe d'espaces mémoire dans le support mémoire. Ce groupe comprend N espaces mémoire. Chaque espace mémoire a une position déterminée et une taille déterminée. La taille des espaces mémoire est suffisante pour y écrire les données des enregistrements du groupe.

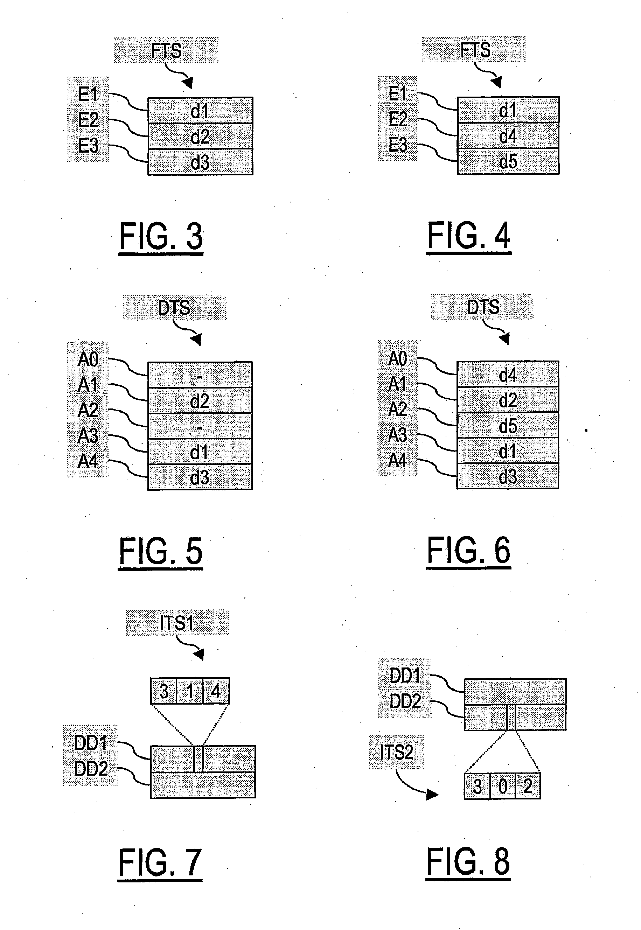

On se réfère maintenant aux figures 3 et 5 sur lesquelles sont représentés le fichier FTS et un exemple d'espaces mémoires alloués pour ce fichier. Le fichier FTS comprend trois enregistrements E1, E2, E3. Deux de ces enregistrements au maximum peuvent être modifiés lors d'une mise à jour des données de ce fichier. On alloue donc un espace mémoire pour chaque enregistrement, et deux espaces mémoire supplémentaires pour mettre à jour les données de ce fichier. Par conséquent on alloue au total un groupe DTS de cinq espaces mémoires A0, A1, A2; A3, A4 pour le fichier FTS, deux espaces mémoire étant alloués en excès par rapport aux enregistrements du fichier.

La position de chaque espace mémoire alloué est un paramètre des programmes exécutés par les machines mettant en oeuvre les procédés d'écriture ou de lecture selon l'invention. On détermine la position de chaque espace mémoire, de sorte que chaque enregistrement du fichier puisse être écrit dans un espace mémoire parmi les espaces mémoires alloués. La taille d'un espace mémoire alloué (et l'écart entre deux espaces mémoires) est au moins égale à la taille de l'enregistrement qui y est écrit ou qui est destiné à y être écrit.

Avantageusement, afin d'être compatible avec les mécanismes de sécurité mis en oeuvre par la carte, les espaces mémoire alloués pour un fichier déterminé sont protégés par les mêmes clés d'accès. Avantageusement, les mêmes droits d'accès sont associés aux clés d'accès qui protègent des espaces mémoires alloués pour un fichier déterminé.

### Exemple 6 : Allocation des espaces mémoires de la carte des exemples 1 et 2 pour écrire des données de l'exemple 4

On se réfère aux figures 1 et 2. On alloue des groupes d'espaces mémoire DV1, DT1, DV2, DT2, DV3, DT3, DVS, DTS, DHS pour écrire les enregistrements des fichiers FV1, FT1, FV2, FT2, FV3, FT3, FVS, FTS, FHS.

Le tableau suivant comprend cinq colonnes. La première colonne contient la référence à un groupe d'espaces mémoire alloués. La seconde colonne contient le nombre de blocs alloués (1 bloc = 1 espace mémoire dans cet exemple). La troisième colonne contient le nom du fichier dont les enregistrements sont destinés à être écrit dans ces espaces mémoire. La quatrième colonne rappelle le nombre d'enregistrements du fichier. La cinquième colonne contient le nombre d'enregistrements maximum pouvant être modifiés lors d'une mise à jour du fichier.

| Espaces allouées | Nb. de blocs alloués | Fichier | Nb. enregistrements | Mise à jour |
|---|---|---|---|---|
| DV*i* | 2 | FT*i* | 1 | 1 |
| DT*i* | 4 | FT*i* | 2 | 2 |
| DVS | 2 | FVS | 1 | 1 |
| DTS | 5 | FTS | 3 | 2 |
| DHS | 7 | FHS | 6 | 1 |

Bien entendu, des espaces mémoire peuvent être alloués pour écrire les enregistrements de plusieurs fichiers, et non d'un fichier unique. Dans la mesure où un seul des fichiers est modifié lors de chaque mise à jour, ceci permet de réduire le nombre d'espaces mémoire à allouer en excès.

### Fin de l'exemple 6.

Après avoir alloué des espaces mémoires du support mémoire, on peut réaliser l'écriture des données selon l'invention. On écrit chaque enregistrement du fichier dans un espace mémoire parmi les espaces mémoires alloués. On écrit ensuite un descripteur du fichier dans le support mémoire. Le descripteur du fichier est un ensemble de données qui permettent de déterminer dans quel espace mémoire alloué est écrit chaque enregistrement du fichier.

On se réfère aux figures 3, 5, et 7 pour décrire un exemple d'écriture des données d'un fichier. Le fichier est le fichier partagé FTS des exemples précédents. Les espaces mémoires alloués A0, A1, ... A4 pour écrire les données de ce fichier sont au nombre de cinq. Le fichier FTS comprend trois enregistrements E1, E2, E3. On écrit les données d1, d2, d3 de ces enregistrements dans trois espaces parmi les cinq alloués. Par exemple illustré à la figure 5, les données d1 de l'enregistrement E1 sont écrites dans l'espace mémoire alloué A3, les données d2 de l'enregistrement E2 sont écrites dans l'espace mémoire alloué A1, et les données d3 de l'enregistrement E3 sont écrites dans l'espace mémoire alloué A4. On écrit ensuit le descripteur ITS1 du fichier FTS. Le descripteur ITS1 fait référence aux espaces mémoires A3, A1, A4, pris dans cet ordre. Il permet de retrouver les enregistrements du fichier FTS.

Selon l'invention, une fois les enregistrements d'un fichier écrits, il est possible de les mettre à jour d'une manière telle que les données enregistrées du fichier restent inchangées si une opération d'écriture s'interrompt avant la fin de la mise à jour.

On se réfère aux figures 4, 6 et 7 pour décrire un exemple de mise à jour du fichier FTS. Cette mise à jour a lieu après l'étape d'écriture décrite en relation avec les figures 3, 5 et 7. Lors de cette étape de mise à jour, les données d2 et d3 ,contenues respectivement dans les enregistrements E2 et E3, sont destinées à être remplacées par de nouvelles données, d4 et d5.

On lit d'abord le descripteur de fichier ITS1 (voir figure 7). On en déduit les espaces mémoires, qui parmi les espaces mémoires alloués DTS, ne sont pas référencés par le descripteur ITS1. Dans cet exemple, il s'agit des espaces mémoires A0 et A2. On écrit les nouvelles données d4, d5 dans des espaces mémoires parmi les espaces mémoires non référencés. Dans cet exemple, les données d4 sont écrites dans l'espace mémoire A0 et les données d5 sont écrites dans l'espace mémoire A2. On écrit un nouveau descripteur ITS2 du fichier dans le support mémoire. Le nouveau descripteur ITS2 référence les espaces mémoires A0 et A2 à la place des espaces mémoires A1 et A4 respectivement. En d'autres termes, ITS2 référence les espaces mémoires dans lesquels sont écrites les nouvelles données d4, d5 à la place des espaces mémoires dans lesquels sont écrites les anciennes données d2, d3.

Un descripteur de fichier, tel que ITS1 ou ITS2, peut contenir par exemple un numéro d'ordre de chaque espace mémoire alloué. Ce numéro d'ordre peut dans cet exemple varier de zéro à quatre. Dans les exemples précédents, le descripteur ITS1 comprend les nombres trois, un et quatre. Le descripteur ITS2 comprend quant à lui les nombres trois, zéro et deux. Chacun des nombres d'un descripteur peut être codé en binaire sur trois bits. On peut ainsi coder en binaire les trois nombres formant le descripteur ITS1 ou ITS2 sur neuf bits.

Ce mode de réalisation, dans lequel les espaces mémoires libres ne sont pas référencés, permet de minimiser la taille du descripteur de fichier. Cependant, ceci implique de lire l'ensemble du descripteur de fichier pour en déduire les espaces mémoires libres.

Selon un autre mode de réalisation (non représenté), les descripteurs ITS1 et/ou ITS2 référencent non seulement les espaces mémoires utilisés, mais aussi les espaces mémoires libres. Par exemple, les espaces mémoires libres peuvent être les derniers espaces mémoires référencés dans le descripteur de fichier. Ce mode de réalisation permet de trouver plus rapidement les espaces mémoires libres. Il permet en outre de répartir l'usure entre les blocs mémoires, en veillant à ne pas écrire les nouvelles données toujours dans les mêmes espaces mémoires.

Toutefois, ce mode de réalisation est intéressant dans la mesure où il n'impose pas d'écrire le descripteur de fichier sur un bloc de données supplémentaire. En effet, s'il faut lire un bloc de plus, on perd plus de temps à lire des données (temps d'accès) qu'à déterminer les espaces mémoires libres (non référencés). Par conséquent, on préférera dans ce cas le premier mode de réalisation décrit.

Selon un mode de réalisation avantageux, les enregistrements d'un fichier, pour lesquels un groupe d'espace mémoire est alloué, ont tous la même taille. Ceci permet de limiter la taille des espaces mémoire à allouer. Avantageusement, la taille de ces enregistrements est égale à un nombre entier de blocs mémoire. Avantageusement, les espaces mémoires ont exactement la même taille que les enregistrements. Lorsque tous les enregistrements du fichier ont la même taille, le descripteur de fichier permet de trouver les données du fichier en réalisant une permutation des données enregistrées dans les espaces mémoires alloués pour ce fichier.

Afin de tester si des données enregistrées sont intègres, on peut utiliser un sceau. Un sceau est une valeur qui varie en fonction des données à tester. Ce sceau est enregistré sur la carte. On lit les données enregistrées, et on calcule la valeur associée à ces données. Cette valeur calculée est comparée à la valeur du sceau enregistré. Si ces valeurs sont identiques, les données enregistrées sont réputées être intègres. Une façon classique pour réaliser un sceau est de calculer un code de redondance cyclique (CRC).

Toutefois, l'utilisation d'un CRC n'est pas satisfaisante pour tester l'intégrité des données enregistrées sur une carte usée (carte à puce ou à bande magnétique). Avec le temps, certains bits peuvent garder une valeur constante, correspondant à l'état de moindre énergie (zéro ou un selon la technologie employée). Ces bits défectueux peuvent être aussi bien pour des bits du sceau que des les bits de données. Par conséquent, on peut se trouver dans une situation où des erreurs d'écriture dans le sceau et les données se compensent, de telle sorte que des données erronées sont réputées être intègres.

Selon un mode de réalisation de l'invention, on détermine un sceau par comptage du nombre de zéros enregistrés. Par exemple, si des données enregistrées sur huit bits contiennent le nombre 240 (soit "11110000" en binaire), la valeur du sceau associé est 4 (soit "100" en binaire). Si le niveau de faible énergie est zéro, certains bits du nombre enregistré sont susceptibles de rester à zéro. La valeur du sceau enregistré sera strictement inférieure au nombre de zéros enregistrés. Même si des bits du sceau sont erronés (à zéro au lieu de un), la valeur du sceau enregistré restera strictement inférieure au nombre de zéros enregistrés dans les données. Le comptage du nombre de zéro permet d'obtenir le même résultat si le niveau de faible énergie est un (la valeur du sceau reste strictement supérieure au nombre de zéros enregistrés dans les données). Par conséquent le test d'intégrité par le sceau reste fiable, même si le sceau contient des bits erronés. En d'autres termes, l'usure de la carte ne peut provoquer des erreurs qui se compensent.

Bien entendu, le sceau peut être le nombre de bits à zéro auquel on ajoute une constante additive. On peut multiplier cette valeur par toute constante strictement positive. D'une manière générale, la valeur du sceau est une fonction croissante du nombre de zéros contenus dans les données à tester.

Le sceau peut être appliqué aux données du fichier. Selon un mode de réalisation avantageux, le sceau est appliqué aux données du descripteur de fichier, et non aux données du fichier lui-même. On peut ainsi tester l'intégrité du descripteur. L'opération d'écriture est réputée s'être déroulé correctement si le descripteur est écrit correctement, dans la mesure où l'étape d'écriture du descripteur suit l'étape d'écriture des données du fichier.

Lors de la lecture des données du fichier, on vérifie l'intégrité des données lues avec le sceau. On peut ainsi tester si la dernière transaction (opération d'écriture) s'est bien déroulé. En cas d'erreur (transaction interrompue de manière inopinée par exemple), l'invention permet de retrouver les anciennes données du fichier. On peut ainsi préserver les anciennes données enregistrées sur la carte, même lorsqu'une transaction est interrompue de façon inopinée.

On peut conserver en mémoire le descripteur du fichier correspondant aux anciennes données (fichier avant la mise à jour). Pour un même fichier, on utilise donc deux descripteurs (ancien et nouveau). A chaque opération de mise à jour d'un fichier, on peut écrire le nouveau descripteur à la place du plus ancien.

Afin de reconnaître l'ancien du nouveau descripteur, on peut enregistrer un numéro de séquence qui permet de dater les descripteurs. Pour reconnaître l'ancien du nouveau descripteur, il suffit de coder le numéro de séquence sur deux bits (nombre compris entre zéro et trois).

Le tableau suivant donne le descripteur le plus récent en fonction des numéros de séquence associés à deux descripteurs A et B :

| Numéro de séquence associé à A | Numéro de séquence associé à B | Descripteur le plus récent |
|---|---|---|
| 0 | 1 | B |
| 0 | 3 | A |
| 1 | 0 | A |
| 1 | 2 | B |
| 2 | 1 | A |
| 2 | 3 | B |
| 3 | 0 | B |
| 3 | 2 | A |

Les combinaisons non représentées (deux numéros de séquence de même parité) correspondent à des états anormaux.

Selon une variante de réalisation, un numéro de séquence peut être utilisé pour tester l'âge de la carte. Lorsque ce nombre atteint une valeur déterminée, correspondant à un état d'usure moyen prédéterminé, on peut mettre en oeuvre une maintenance préventive consistant à remplacer la carte ancienne par une carte neuve. En d'autres termes, on peut grâce au numéro de séquence détecter le moment où une carte doit être remplacée.

Lorsque les cartes sont utilisées comme titres de transport, on peut réaliser une opération dite de ratification. Cette opération consiste inscrire des données sur la carte, ces données attestant que la transaction (mise à jour) opérée par une machine s'est bien déroulée. Une carte est dite ratifiée lorsqu'une ratification a été effectuée. Une carte ne peut être ratifiée que si, suite à une transaction, la machine a pu vérifier que celle ci s'est bien déroulée.

Selon un mode de réalisation de l'invention, on réalise une ratification en copiant le nouveau descripteur sur l'ancien descripteur. Une carte ratifiée possède deux descripteurs identiques. Si les descripteurs sont différents, la carte n'a pas été ratifiée.

Il n'est alors plus nécessaire d'inscrire de numéro de séquence pour reconnaître le nouveau et l'ancien descripteur. A cet effet, on peut dédier un premier emplacement mémoire à l'écriture des nouveaux descripteurs, l'autre emplacement contenant la copie réalisée lors des ratifications. Lors des mises à jour, le nouveau descripteur est toujours écrit dans le premier emplacement mémoire. A la fin de la ratification, il est recopié à l'autre emplacement. Cet autre emplacement contient donc toujours l'ancien descripteur si la ratification n'a pas lieu.

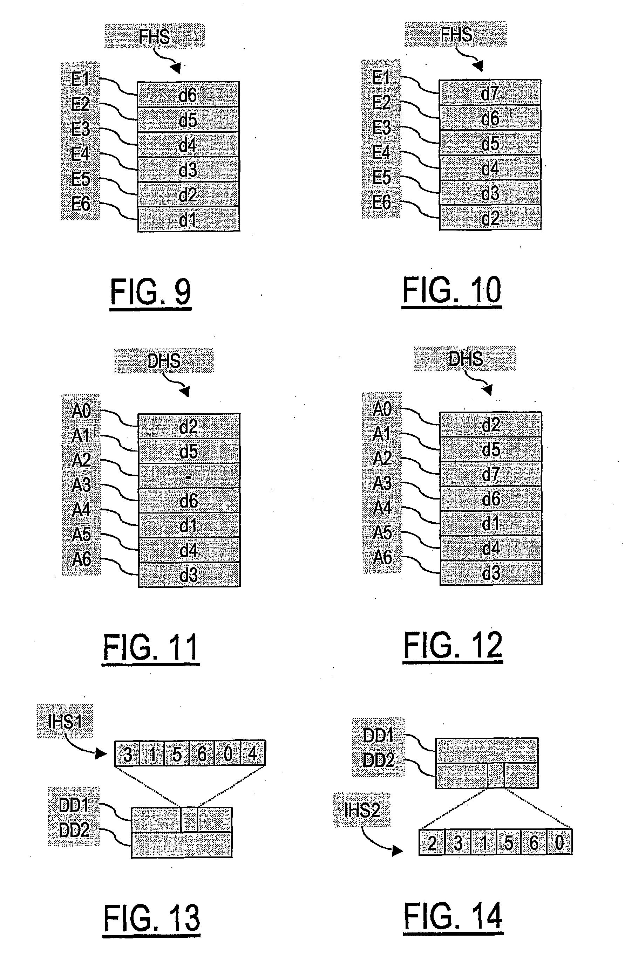

On se réfère maintenant aux figures 9 à 14 sur lesquelles est représenté un exemple de mise à jour d'un fichier cyclique.

La figure 9 représente le fichier FHS (historique de transactions). Ce fichier comporte six enregistrements référencés E1 à E6. Ces enregistrements sont inscrits en mémoire dans le groupe de sept espaces mémoire DHS. Le groupe d'espace mémoire DHS (voir figure 11), alloué pour le fichier FHS, contient initialement des données référencées d6 à d1. Un premier descripteur de fichier IHS1 comprend par exemple un numéro d'ordre de chaque espace mémoire correspondant à chaque enregistrement. Le descripteur IHS1 représenté (voir figure 13) comprend la séquence 3; 1; 5; 6; 0; 4, ce qui signifie que les données des enregistrements E1 à E6 sont mémorisées respectivement dans les espaces mémoires A3, A1, A5, A6, A0 et A4.

Comme illustré sur la figure 10, lors de l'opération de mise à jour de FHS, on ajoute une donnée d7 dans enregistrement E1, on décale les données d6 à d2 d'un enregistrement, et on supprime la donnée d1 (anciennement dans l'enregistrement E6).

A cet effet, on écrit la nouvelle donnée d7 dans l'espace mémoire libre A2, c'est à dire l'espace mémoire non référencé par IHS1 (voir figure 12) dans cet exemple de réalisation. On inscrit un nouveau descripteur de fichier IHS2 (voir figure 14). On remarque que le nouveau descripteur de fichier se déduit très simplement de l'ancien. Le nouveau descripteur comprend la séquence 2; 3; 1; 5; 6; 0. Cette séquence se déduit de l'ancien descripteur en ajoutant le nombre 2 en tête de séquence, en effectuant un décalage des autres nombres, et en supprimant le dernier nombre de la séquence.

Ainsi, l'invention permet de mettre à jour les données du fichier cyclique de manière très simple. Il suffit d'écrire simplement les nouvelles données d7, et d'écrire le nouveau descripteur IHS2.

Selon un mode de réalisation avantageux, les descripteurs de fichier sont codés par un numéro représentant un index dans une table prédéterminée. Cette table contient tous les arrangements possibles des enregistrements du fichier dans les espaces mémoires alloués.

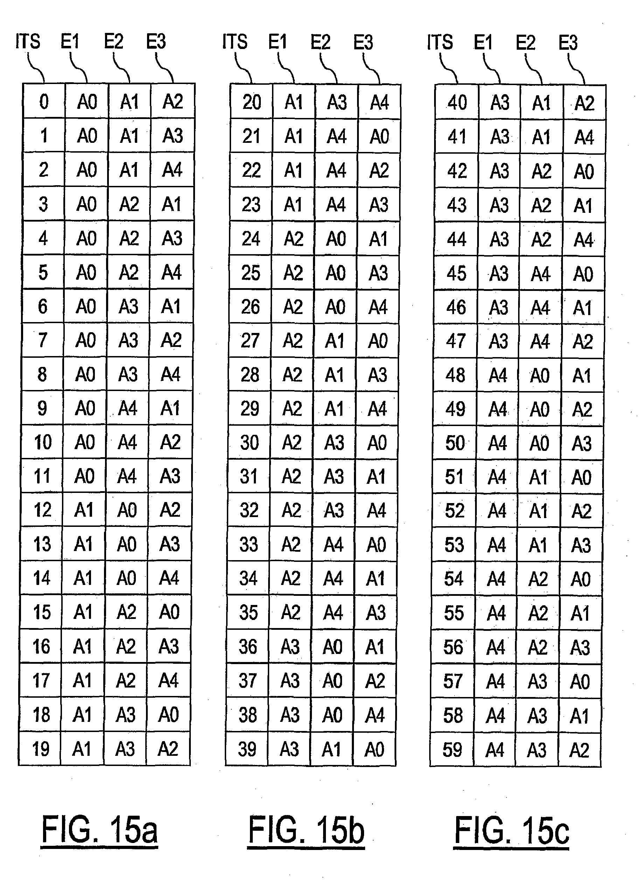

On se réfère maintenant aux figures 15a à 15c. Ces figures représentent exemple de table pour coder les descripteurs ITS1 ou ITS2.

La table comprend une première colonne ITS, qui est l'index de l'arrangement. Les trois colonnes suivantes contiennent la référence de l'espace mémoire associé à chacun des trois enregistrements E1, E2, E3 du fichier FTS. Le nombre d'arrangements possibles de trois enregistrements dans cinq espaces mémoires est de soixante (5! / 2! = 60). Le numéro unique formant le descripteur ITS1 ou ITS2 peut donc être codé en binaire avec six bits au lieu de neuf précédemment. Le descripteur ITS1, qui contenait la séquence 3; 1; 4 peut être remplacé par l'index 41. Le descripteur ITS2, qui contenait la séquence 3; 0; 2, peut être remplacé par l'index 37.

D'une manière générale, le nombre d'arrangements possibles est égal à N!/P!, où N est le nombre total d'espace mémoires alloués et P est égal au nombre d'espaces mémoire alloués en excès par rapport au nombre d'enregistrements sélectionnés.

## Revendications

1. Procédé d'écriture et de mise à jour d'un fichier (FTS) écrit dans un support mémoire utilisant deux descripteurs du fichier, le fichier comprenant un nombre déterminé d'enregistrements (E1, E2, E3) de tailles déterminées, une partie de ces enregistrements (E2, E3) étant destinée à être mise à jour avec de nouvelles données (d4, d5), remplaçant d'anciennes données (d2, d3), un nombre déterminé d'espaces mémoires (A0, A1, A2, A3, A4) du support mémoire étant alloués pour écrire les données des enregistrements du fichier, la position de chaque espace mémoire étant déterminée, les données de chaque enregistrement du fichier étant écrites dans un espace mémoire parmi les espaces mémoires alloués, un premier descripteur (ITS1) du fichier étant écrit dans le support mémoire, le descripteur du fichier référençant, dans l'ordre des enregistrements du fichier, des espaces mémoires parmi les espaces mémoires alloués pour permettre de déterminer dans quel espace mémoire alloué sont écrites les données de chaque enregistrement du fichier, le nombre d'espaces mémoire alloués excédant le nombre total d'enregistrements du fichier, le nombre d'espaces mémoire en excès étant au moins égal au nombre maximum d'enregistrements d'un groupe d'enregistrements susceptibles d'être mis à jour simultanément lors d'une opération d'écriture, le procédé comprenant les étapes suivantes :
- on lit le descripteur du fichier,
- on en déduit les espaces mémoires alloués (A0, A2) libres,
- on écrit les nouvelles données (d4, d5) dans des espaces mémoires parmi les espaces mémoires alloués libres,
- on écrit ensuite un nouveau descripteur (ITS2) du fichier dans le support mémoire, le nouveau descripteur référençant les espaces mémoires (A0, A2) dans lesquels sont écrites les nouvelles données (d4, d5) à la place des espaces mémoires (A1, A4) dans lesquels sont écrites les anciennes données (d2, d3),
- on conserve en mémoire le premier descripteur du fichier,
- à chaque opération de mise à jour du fichier ultérieure, on écrit un nouveau descripteur du fichier à la place du descripteur le plus ancien des deux descripteurs du fichier.

2. Procédé d'écriture et de mise à jour selon la revendication 1, **caractérisé en ce que** les enregistrements d'un fichier, pour lesquels un groupe d'espace mémoire est alloué, ont tous la même taille.

3. Procédé d'écriture et de mise à jour selon l'une quelconque des revendications précédentes, **caractérisé en ce que** le descripteur est codé par nombre représentant un index d'arrangement dans une table prédéterminée, ladite table contenant tous les arrangements possibles des enregistrements du fichier dans les espaces mémoires alloués.

4. Procédé d'écriture et de mise à jour selon l'une quelconque des revendications précédentes, **caractérisé en ce qu'**on enregistre un sceau, associé aux données de chaque descripteur, le sceau étant une fonction croissante du nombre de bits à zéro du descripteur.

5. Procédé d'écriture et de mise à jour selon l'une quelconque des revendications précédentes, **caractérisé en ce qu'**on enregistre un numéro de séquence, associé à chaque descripteur.

6. Procédé d'écriture et de mise à jour selon la revendication 5, **caractérisé en ce que** le numéro de séquence est codé sur deux bits.

7. Procédé d'écriture et de mise à jour selon l'une quelconque des revendications précédentes, **caractérisé en ce que** les espaces mémoires libres ne sont pas référencés pour minimiser la taille du descripteur de fichier.

8. Procédé d'écriture et de mise à jour selon l'une quelconque des revendications 1 à 4 ou 7, **caractérisé en ce qu'**on copie le nouveau descripteur (ITS2) sur le premier (ITS1) pour effectuer une ratification.

## Patentansprüche

1. Verfahren zum Schreiben und Aktualisieren einer in einem Speichermedium geschriebenen Datei (FTS), das zwei Deskriptoren der Datei verwendet, wobei die Datei eine bestimmte Anzahl von Datensätzen (E1, E2, E3) bestimmter Größen umfasst, wobei ein Teil dieser Datensätze (E2, E3) zur Aktualisierung mit neuen Daten (d4, d5), die alte Daten (d2, d3) ersetzen, bestimmt ist, wobei eine bestimmte Anzahl von Speicherräumen (A0, A1, A2, A3, A4) des Speichermediums zum Schreiben der Daten der Datensätze der Datei zugewiesen sind, wobei die Position jedes Speicherraums bestimmt ist, wobei die Daten jedes Datensatzes der Datei in einen Speicherraum der zugewiesenen Speicherräume geschrieben sind, wobei ein erster Deskriptor (ITS1) der Datei in das Speichermedium geschrieben ist, wobei der Deskriptor der Datei in der Reihenfolge der Datensätze der Datei Speicherräume der zugewiesenen Speicherräume referenziert, um bestimmen zu können, in welchen zugewiesenen Speicherraum die Daten jedes Datensatzes der Datei geschrieben sind, wobei die Anzahl der zugewiesenen Speicherräume die Gesamtanzahl der Datensätze der Datei überschreitet, wobei die Anzahl der überschüssigen Speicherräume mindestens gleich der maximalen Anzahl der Datensätze einer Gruppe von Datensätzen ist, die gleichzeitig während einer Schreiboperation aktualisierbar sind, wobei das Verfahren die folgenden Schritte umfasst:
- Lesen des Deskriptors der Datei,
- Ableiten daraus der freien zugewiesenen Speicherräume (A0, A2),
- Schreiben der neuen Daten (d4, d5) in Speicherräume der freien zugewiesenen Speicherräume,
- danach Schreiben eines neuen Deskriptors (ITS2) der Datei in das Speichermedium, wobei der neue Deskriptor die Speicherräume (A0, A2) referenziert, in denen die neuen Daten (d4, d5) an die Stelle der Speicherräume (A1, A4) geschrieben sind, in denen die alten Daten (d2, d3) geschrieben sind,
- Aufbewahren des ersten Deskriptors der Datei im Speicher,
- bei jeder späteren Aktualisierungsoperation der Datei Schreiben eines neuen Deskriptors der Datei an die Stelle des ältesten Deskriptors der zwei Deskriptoren der Datei.

2. Verfahren zum Schreiben und Aktualisieren nach Anspruch 1, **dadurch gekennzeichnet, dass** die Datensätze einer Datei, für die eine Speichemaumgruppe zugewiesen ist, alle dieselbe Größe haben.

3. Verfahren zum Schreiben und Aktualisieren nach einem der vorangehenden Ansprüche, **dadurch gekennzeichnet, dass** der Deskriptor mit der Zahl codiert ist, die einen Anordnungsindex in einer vorbestimmten Tabelle darstellt, wobei die Tabelle alle möglichen Anordnung der Datensätze der Datei in den zugewiesenen Speicherräumen enthält.

4. Verfahren zum Schreiben und Aktualisieren nach einem der vorangehenden Ansprüche, **dadurch gekennzeichnet, dass** ein den Daten jedes Deskriptors zugeordneter Bucket registriert wird, wobei der Bucket eine wachsende Funktion der Anzahl der Nullbits des Deskriptors ist.

5. Verfahren zum Schreiben und Aktualisieren nach einem der vorangehenden Ansprüche, **dadurch gekennzeichnet, dass** eine jedem Deskriptor zugeordnete Sequenznummer registriert wird.

6. Verfahren zum Schreiben und Aktualisieren nach Anspruch 5, **dadurch gekennzeichnet, dass** die Sequenznummer auf zwei Bits codiert ist.

7. Verfahren zum Schreiben und Aktualisieren nach einem der vorangehenden Ansprüche, **dadurch gekennzeichnet, dass** die freien Speicherräume nicht referenziert sind, um die Größe des Dateideskriptors zu minimieren.

8. Verfahren zum Schreiben und Aktualisieren nach einem der Ansprüche 1 bis 4 oder 7, **dadurch gekennzeichnet, dass** der neue Deskriptor (ITS2) über den ersten (ITS1) kopiert wird, um eine Ratifizierung durchzuführen.

## Claims

1. A method of writing and updating a file (FTS) written in a memory medium using two file descriptors, the file including a determined number of records (E1, E2, E3) of determined sizes, part of these recordings (E2, E3) being intended to be updated with new data (d4, d5) replacing old data (d2, d3), a determined number of memory spaces (A0, A1, A2, A3, A4) of the memory medium being allocated to write the data of the file records, the position of each memory space being determined, the data of each file record being written in one memory space taken from the allocated memory spaces, a first file descriptor (ITS1) being written in the memory medium, the file descriptor referencing, in the order of the file records, memory spaces taken from the allocated memory spaces to enable the allocated memory space in which the data of each file record are written to be determined, the number of memory spaces allocated exceeding the total number of file records, the number of excess memory spaces being at least equal to the maximum number of records of a group of records likely to be updated simultaneously in a write operation, the method including the following steps:
- reading the file descriptor,
- deducing the free allocated memory spaces (A0, A2) from this,
- writing the new data (d4, d5) in memory spaces taken from the free allocated memory spaces,
- then writing a new file descriptor (ITS2) in the memory medium, the new descriptor referencing the memory spaces (A0, A2) in which the new data (d4, d5) are written in place of the memory spaces (A1, A4) in which the old data (d2, d3) are written,
- storing the first file descriptor in the memory,
- with each subsequent operation of updating the file, writing a new file descriptor in the place of the oldest descriptor of the two file descriptors.

2. The method of writing and updating according to Claim 1, **characterised in that** the records of a file, for which a group of memory spaces is allocated, are all of the same size.

3. The method of writing and updating according to either of the preceding claims, **characterised in that** the descriptor is encoded by a number representing an arrangement index in a predetermined table, said table containing all of the possible arrangements of the records of the file in the allocated memory spaces.

4. The method of writing and updating according to any of the preceding claims, **characterised in that** a seal is recorded, associated with the data of each descriptor, the seal being an increasing function of the number of zero bits in the descriptor.

5. The method of writing and updating according to any of the preceding claims, **characterised in that** a sequence number is recorded, associated with each descriptor.

6. The method of writing and updating according to Claim 5, **characterised in that** the sequence number is encoded on two bits.

7. The method of writing and updating according to any of the preceding claims, **characterised in that** the free memory spaces are not referenced so as to minimise the size of the file descriptor.

8. The method of writing and updating according to any of Claims 1 to 4 or 7, **characterised in that** the new descriptor (ITS2) is copied onto the first (ITS1) in order to perform a ratification.
